# EUROPEAN PATENT SPECIFICATION

(11) **EP 1 524 156 B1**
(45) Date of publication and mention of the grant of the patent: **09.02.2011**
(21) Application number: 04255724.9
(22) Date of filing: 21.09.2004
(51) Int. Cl.: B60R 11/02

(54) **Car audio/video equipment**
Fahrzeug- Audio/Video- Ausrüstung
Equipement audio/vidéo pour véhicule.

(30) Priority: 25.09.2003 US 669417
(43) Date of publication of application: 20.04.2005
(73) Proprietor: Alco Electronics Limited, Quarry Bay, Hong Kong Sar (CN)
(72) Inventor: Leung, Wilson Wai Sing, Quarry Bay, Hong Kong SAR (CN)
(74) Representative: Martin, David John

(56) References cited:
- EP-A- 0 751 042
- EP-A- 0 899 889
- EP-A- 1 178 489
- US-A1- 2002 013 138
- PATENT ABSTRACTS OF JAPAN vol. 012, no. 267 (M-722), 26 July 1988 (1988-07-26) & JP 63 049566 A (ALPINE ELECTRON INC), 2 March 1988 (1988-03-02)
- PATENT ABSTRACTS OF JAPAN vol. 2003, no. 10, 8 October 2003 (2003-10-08) & JP 2003 175775 A (KENWOOD CORP), 24 June 2003 (2003-06-24)
- PATENT ABSTRACTS OF JAPAN vol. 004, no. 049 (M-007), 15 April 1980 (1980-04-15) & JP 55 019652 A (NISSAN MOTOR CO LTD), 12 February 1980 (1980-02-12)

## Description

The present invention relates to an audio/video equipment, such as a CD, VCD or DVD player, for use in a car or motor vehicle.

### BACKGROUND OF THE INVENTION

Certain existing car audio/video apparatus have a fold-down control panel that can be removed for security purpose. Control keys are invariably provided on the outer side of the control panel for use when the panel is folded up into the normal position. Pivoting down of the control panel allows access to a CD or cassette tape slot behind, or detachment of the panel. A remote controller is often provided as a total separate item to enable control from a distance.

JP 63 049566 discloses a car radio/video equipment having a chassis, a playing mechanism provided in the chassis, and a control panel for operating the playing mechanism. The control panel is detachably connected to the chassis, and a wireless link is provided between the control panel and the playing mechanism such that the control panel can act as a remote control.

The Invention seeks to provide an improved car audio/video equipment in the aforesaid aspects.

### SUMMARY OF THE INVENTION

According to the intention, there is provided a car audio/video equipment comprising a chassis including a front side having a bottom part, a playing mechanism provided in the chassis, and a control panel provided on the chassis front side for operating the playing mechanism. The control panel has a bottom part detachably hinged to that of the chassis front side such that the panel is pivotable between an upward position lying flat on the chassis front side and a downward position expending therefrom for operation. A wireless link is provided between the control panel and the playing mechanism such that the playing mechanism is operable by the control panel when the panel is detached from the chassis, acting as a remote controller. The wireless link is provided by a pair of transmitter and receiver located at the control panel and the chassis front side respectively at positions generally aligned witch each other such that the playing mechanism is operable by the control panel when the panel is attached to the chassis,
characterised in that the control panel is hinged to the chassis for pivotal movement generally about a horizontal hinge axis, and the transmitter and receiver are located adjacent the hinge axis.

Preferably, the control panel has a first side adjacent the chassis front side, on which a plurality of control keys is provided for operating the playing mechanism.

More preferably, the control panel includes a second side opposite the first side, the second side being substantially blank.

In a specific construction, each bottom part of the chassis front side and the control panel has left and right corners adjacent those of the other bottom part respectively, and the adjacent corners of each of the left and right pairs are releasably hinged together.

It is preferred that a releasable catch is provided between the chassis front side and the control panel for holding the panel in the upward position.

Preferably, the control panel dips at an acute angle in the downward position.

It is preferred that the control panel has generally the same shape and size as the chassis front side, and in the upward position covers substantially the entire chassis front side.

Preferably, the wireless link comprises an infrared link.

Further more preferably, the transmitter and receiver are located at substantially central positions as between left and right along the width of the control panel and chassis.

In a different embodiments the transmitter and receiver are located at the same bottom corners of the control panel and chassis front side respectively.

### BRIEF DESCRIPTION OF DRAWINGS

The invention will now be more particularly described, by way of example only, with reference to the accompanying drawings, in which:
Figure 1 is a front perspective view of an embodiment of a car audio/video equipment in accordance with the invention, said equipment including a control panel shown pivoted closed;
Figure 2 is a front perspective view corresponding to Figure 1, showing the control panel pivoted down and open; and

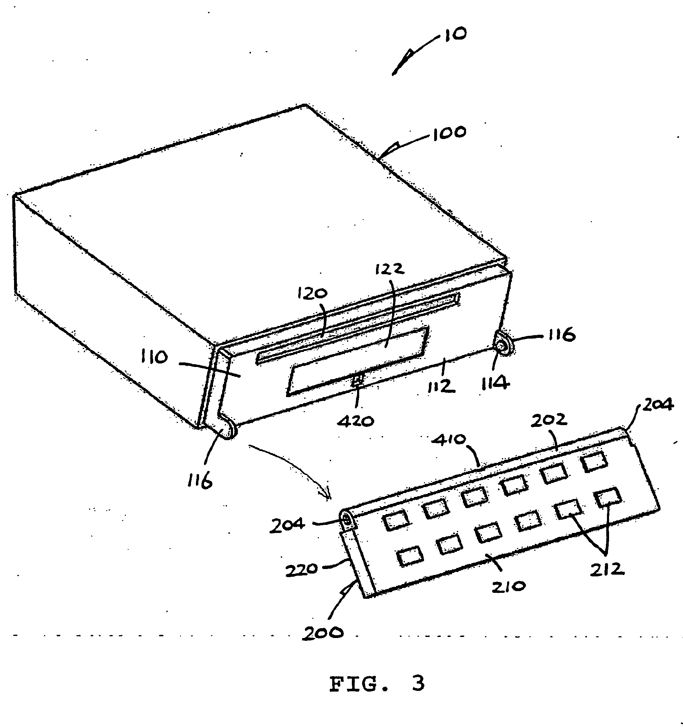

Figure 3 is a front perspective view corresponding to Figure 2, showing the control panel detached.

### DETAILED DESCRIPTION OF PREFERRED EMBODIMENT

Referring to the drawings, there is shown an audio/video equipment 10 for motor vehicles embodying the invention, which equipment 10 comprises a single DIN rectangular chassis 100, a disc playing mechanism 300 in the chassis 100, and a control panel 200 for controlling the operation of the mechanism 300. The chassis 100 includes a flat rectangular front side 110, on which there are provided a horizontal slot 120 for the insertion of an audio/video disc for the playing mechanism 300 and an LCD display 122 to display the playing information, etc. The chassis front side 110 has a bottom edge 112 and a pair of opposed hinge studs 114 carried on respective protruding lugs 116 at opposite left and right ends (corners) thereof.

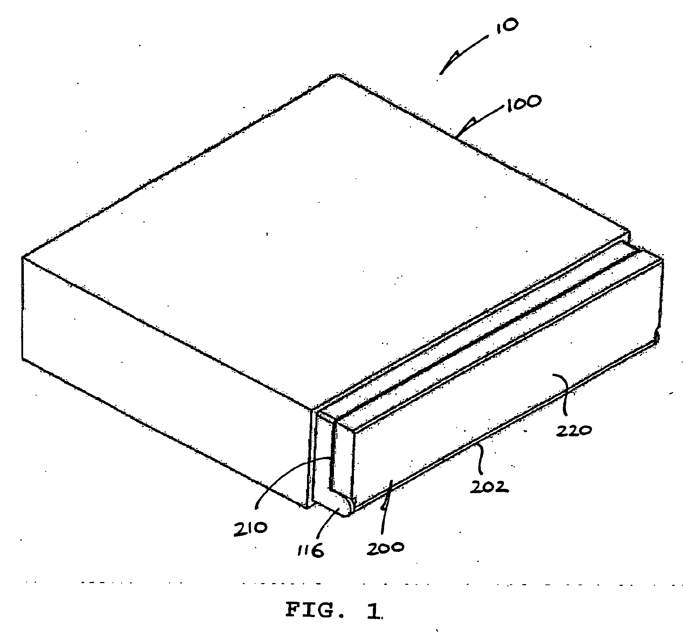

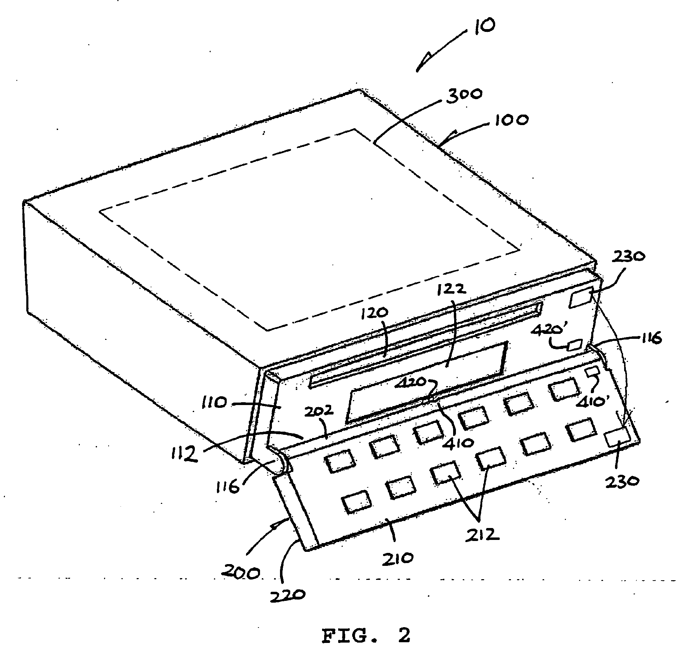

The control panel 200 is provided on the chassis front side 110, having generally the same oblong rectangular shape and size for matching therewith. The control panel 200 has a longer bottom edge 202 that is provided with a pair of hinge holes at opposite left and right ends (corners) thereof in engagement with the corresponding studs 114 of the chassis front side 110. The control panel 200 is thus hinged to the chassis front side 110 at their bottom edges for pivotal movement about a horizontal hinge axis between a vertical upward position (Figure 1) lying flat on the chassis front side 110 and a downward position (Figure 2) extending therefrom.

The control panel 200 has an inner side 210 adjacent or confronting the chassis front side 110, on which a plurality of standard control keys 212 is provided for operating the playing mechanism 300. The opposite, outer side 220 of the control panel 200 is blank, i.e. with control keys. In the downward position, the panel 200 is folded down and opened to reveal its control keys 212 for operation, dipping at an acute angle to facilitate keying. In the upward position, the panel 200 is closed and covers the entire chassis front side 110, with its outer side 220 deliberately rendered blank or vacant to disguise as if the control panel 220 were not there, i.e. having been removed, for security purpose.

To enhance such disguise of absence, the outer side 220 may be provided with or printed with a picture or image of certain blank or internal elements such as screws, electrical connectors and/or a panel parking recess. Nonetheless, a main power switch, which is preferably a flat soft-touch key for inconspicuousness, may be relocated from the inner side 210 of the control panel 200 to the outer side 220 for convenient use by the user in merely resuming the operation of the equipment 10.

A releasable catch 230 is provided between the chassis front side 110 and the control panel 200, at the top right corners thereof, for holding the panel 200 in the upward position. The catch 230 is preferably magnetic for ease of operation or may take the form of a spring-loaded latch releasable by depressing a small button.

Both of the hinges formed by respective pairs of studs 114 and holes 204 are releasable to allow detachment of the control panel 200 from the chassis 100. This can be done, for example, by pushing the panel 200 slightly to the left where the lug 116 is resiliently deflectable or movable, thereby releasing the opposite right hinge, and then swinging the panel 200 out about the left hinge and pulling it off.

The signal communication between the control panel 200 and the playing mechanism 300 is enabled by a wireless infrared link. The link is established between an infrared transmitter 410 as part of the control panel 200 and an infrared receiver 420 connected to the playing mechanism 300 on the chassis front side 110. The transmitter 410 and receiver 420 are located centrally at the bottom edges 202 and 112 of the control panel 200 and chassis front side 110 respectively, generally adjacent the aforesaid hinge axis and at central positions as between left and right along the width of the chassis 100 and panel 200.

The transmitter 410 and receiver 420 are aligned with each other and close together, such that the playing mechanism 300 is operable by the control panel 200 when the panel 200 is attached to the chassis 100. The infrared link will remain co-operable when the control panel 200 is detached from the chassis 100, acting as a remote controller for convenient.

The wireless link enables the same communication channel to be used between the control panel 200 and the playing mechanism 300, which does not need to be changed or switched when the panel 200 is attached to or detached from the chassis 100. No electrical contact is required. The control panel 200 preferably operates on its own independent power source, such as a button battery cell, for simplicity.

It is envisaged that the transmitter 410 (410') may be located at a bottom corner of the control panel 200, with the receiver 420 (420') located at the same corner of the chassis front side 110. This allows the control panel 200, while being used as a remote controller, to be held and operated by one hand more conveniently with its transmitter 410' pointing at the receiver 420'.

The invention has been given by way of example only, and various other modifications of and/or alterations to the described embodiment may be made by persons skilled in the art without departing from the scope of the invention as specified in the appended claims.

## Claims

1. A car audio/video equipment (10) comprising:
a chassis (100) including a front side (110) having a bottom part (112);
a playing mechanism (300) provided in the chassis; and
a control panel (200) provided on the chassis, front side for operating the playing mechanism, the control panel having a bottom part (202) detachably hinged to that of the chassis front side such that the panel is pivotable between an upward position lying flat on the chassis front side and a downward position extending therefrom for operation;
wherin a wireless link is provided between the control panel and the playing mechanism such that the playing mechanism in operable by the control panel when the panel is detached from the chassis, acting as a remote controller, the wireless link is provided by a pair of transmitted and receiver (410,420) located at the control panel and the chassis front side respectively at positions generally aligned witch each other such that the playing mechanism is operable by the control panel when the panel is attached to the chassis;
**characterised in that** the control panel is hinged to the chassis for pivotal movement generally about a horizontal hinge axis, and the transmitter and receiver are located adjacent the hinge axis.

2. The car audio/video equipment as claimed in claim 1, **characterised in that** the control panel has a first side (210) adjacent the chassis front side, on which a plurality of control keys (212) is provided for operating the playing mechanism.

3. The car audio/video equipment as claimed in claim 2, **characterised in that** the control panel includes a second side (220) opposite the first side, the second side being substantially blank.

4. The car audio/video equipment as claimed in any one of claims 1 to 3, **characterised in that** each bottom part of the chassis front side and the control panel has left and right corners adjacent those of the other bottom part respectively, and the adjacent corners of each of the left and right pairs are releasably hinged together.

5. The car audio/video equipment as claimed in any one of claims 1 to 4, **characterised in that** a releasable catch (230) is provided between the chassis front side and the control panel for holding the panel in the upward position.

6. The car audio/video equipment as claimed in any one of claims 1 to 5, **characterised in that** the control panel dips at an acute angle in the downward position.

7. The car audio/video equipment as claimed in any one of claims 1 to 6, **characterised in that** the control panel has generally the same shape and size as the chassis front side, and in the upward position covers substantially the entire chassis front side.

8. The car audio/video equipment as claimed in any one of claims 1 to 7, **characterised in that** the wireless link comprises an infrared link.

9. The car audio/video equipment as claimed in claim 10, **characterised in that** the transmitter and receiver are located at substantially central positions as between left and right along the width of the control panel and chassis.

10. The car audio/video equipment as claimed in claim 10, **characterised in that** the transmitter and receiver are located at the same bottom corners of the control panel and chassis front side respectively.

## Patentansprüche

1. Fahrzeug-AudioNideo-Ausrüstung (10), umfassend:
ein Chassis (100) einschließlich einer Vorderseite (110) mit einem Unterteil (112);
einen im Chassis bereitgestellten Abspielmechanismus (300); und
eine auf der Chassis-Vorderseite bereitgestellte Steuertafel (200) zum Bedienen des Abspielmechanismus, wobei die Steuertafel ein Unterteil (202) hat, das an das Unterteil der Chassis-Vorderseite abnehmbar gelenkig angeschlossen ist, sodass die Tafel zwischen einer flach auf der Chassis-Vorderseite anliegenden Aufwärtsposition und einer zum Bedienen von dort verlaufenden Abwärtsposition schwenkbar ist;
worin eine drahtlose Verbindung zwischen der Steuertafel und dem Abspielmechanismus bereitgestellt ist, sodass der Abspielmechanismus durch die Steuertafel bedienbereit ist, wenn die Tafel vom Chassis abgenommen ist und als eine Fernbedienung funktioniert, wobei die Funkverbindung durch ein Sender- und Empfängerpaar (410, 420) bereitgestellt ist, das an der Steuertafel bzw. der Chassis-Vorderseite an Positionen angeordnet ist, die im Allgemeinen so zueinander ausgerichtet sind, dass der Abspielmechanismus durch die Steuertafel bedienbereit ist, wenn die Tafel am Chassis befestigt ist;
**dadurch gekennzeichnet, dass** die Steuertafel an das Chassis zwecks Drehbewegung im Allgemeinen um eine horizontale Gelenkachse gelenkig angeschlossen ist und der Sender und Empfänger neben der Gelenkachse angeordnet sind.

2. Fahrzeug-Audio/Video-Ausrüstung nach Anspruch 1, **dadurch gekennzeichnet, dass** die Steuertafel neben der Chassis-Vorderseite eine erste Seite (210) hat, auf der eine Vielzahl von Steuertasten (212) zum Bedienen des Abspielmechanismus bereitgestellt ist.

3. Fahrzeug-Audio/Video-Ausrüstung nach Anspruch 2, **dadurch gekennzeichnet, dass** die Steuertafel gegenüber der ersten Seite eine zweite Seite (220) enthält, wobei die zweite Seite im Wesentlichen leer ist.

4. Fahrzeug-Audio/Video-Ausrüstung nach einem der Ansprüche 1 bis 3, **dadurch gekennzeichnet, dass** jedes Unterteil der Chassis-Vorderseite und der Steuertafel linke und rechte Ecken neben jeweils denen des anderen Unterteils hat und die benachbarten Ecken eines jeden der linken und rechten Paare abnehmbar gelenkig zusammengeschlossen sind.

5. Fahrzeug-Audio/Video-Ausrüstung nach einem der Ansprüche 1 bis 4, **dadurch gekennzeichnet, dass** eine lösbare Sperrvorrichtung (230) zwischen der Chassis-Vorderseite und der Steuertafel bereitgestellt ist, um die Tafel in der Aufwärtsposition zu halten.

6. Fahrzeug-Audio/Video-Ausrüstung nach einem der Ansprüche 1 bis 5, **dadurch gekennzeichnet, dass** sich die Steuertafel in einem spitzen Winkel nach unten in die Abwärtsposition neigt.

7. Fahrzeug-Audio/Video-Ausrüstung nach einem der Ansprüche 1 bis 6, **dadurch gekennzeichnet, dass** die Steuertafel im Allgemeinen dieselbe Gestalt und Größe hat wie die Chassis-Vorderseite und in der Aufwärtsposition im Wesentlichen die gesamte Chassis-Vorderseite bedeckt.

8. Fahrzeug-Audio/Video-Ausrüstung nach einem der Ansprüche 1 bis 7, **dadurch gekennzeichnet, dass** die drahtlose Verbindung eine Infrarotverbindung umfasst.

9. Fahrzeug-Audio/Video-Ausrüstung nach Anspruch 10, **dadurch gekennzeichnet, dass** der Sender und Empfänger an im Wesentlichen mittigen Positionen zwischen links und rechts entlang der Breite der Steuertafel und des Chassis angeordnet sind.

10. Fahrzeug-Audio/Video-Ausrüstung nach Anspruch 10, **dadurch gekennzeichnet, dass** der Sender und Empfänger an denselben Unterecken der Steuertafel bzw. der Chassis-Vorderseite angeordnet sind.

## Revendications

1. Equipement audio/vidéo pour véhicule (10) comprenant :
un châssis (100) comprenant une face avant (110) ayant une partie inférieure (112) ;
un mécanisme de lecture (300) prévu dans le châssis ; et
un panneau de commande (200) prévu sur la face avant du châssis pour actionner le mécanisme de lecture, le panneau de commande ayant une partie inférieure (202) articulée de façon détachable à celle de la face avant du châssis de telle sorte que le panneau soit pivotable entre une position ascendante reposant à plat sur la face avant du châssis et une position descendante s'étendant à partir de celle-ci pour l'utilisation ;
dans lequel une liaison sans fil est prévue entre le panneau de commande et le mécanisme de lecture de telle sorte que le mécanisme de lecture puisse être actionné par le panneau de commande lorsque le panneau est détaché du châssis, agissant comme une commande à distance, la liaison sans fil étant assurée par une paire d'émetteur et de récepteur (410, 420) se trouvant au niveau du panneau de commande et de la face avant du châssis à des positions généralement alignées l'une par rapport à l'autre de telle sorte que le mécanisme de lecture puisse être actionné par le panneau de commande lorsque le panneau est fixé au châssis ;
**caractérisé en ce que** le panneau de commande est articulé sur le châssis pour effectuer un mouvement de pivotement généralement autour d'un axe d'articulation horizontal, et l'émetteur et le récepteur sont situés de façon adjacente à l'axe d'articulation.

2. Equipement audio/vidéo pour véhicule selon la revendication 1, **caractérisé en ce que** le panneau de commande a une première face (210) adjacente à la face avant du châssis, sur laquelle est prévue une pluralité de touches de commande (212) pour actionner le mécanisme de lecture.

3. Equipement audio/vidéo pour véhicule selon la revendication 2, **caractérisé en ce que** le panneau de commande comprend une seconde face (220) à l'opposé de la première face, la seconde face étant sensiblement vierge.

4. Equipement audio/vidéo pour véhicule selon l'une quelconque des revendications 1 à 3, **caractérisé en ce que** chaque partie inférieure de la face avant du châssis et du panneau de commande a des angles gauche et droit adjacents respectivement à ceux de l'autre partie inférieure, et les angles adjacents de chacune des paires gauche et droite sont articulés entre eux de façon amovible.

5. Equipement audio/vidéo pour véhicule selon l'une quelconque des revendications 1 à 4, **caractérisé en ce qu'**un cliquet libérable (230) est prévu entre la face avant du châssis et le panneau de commande pour maintenir le panneau dans la position ascendante.

6. Equipement audio/vidéo pour véhicule selon l'une quelconque des revendications 1 à 5, **caractérisé en ce que** le panneau de commande plonge à un angle aigu dans la position descendante.

7. Equipement audio/vidéo pour véhicule selon l'une quelconque des revendications 1 à 6, **caractérisé en ce que** le panneau de commande a généralement la même forme et la même taille que la face avant du châssis, et dans la position ascendante, couvre sensiblement l'ensemble de la face avant du châssis.

8. Equipement audio/vidéo pour véhicule selon l'une quelconque des revendications 1 à 7, **caractérisé en ce que** la liaison sans fil est constituée d'une liaison infrarouge.

9. Equipement audio/vidéo pour véhiculé selon la revendication 10, **caractérisé en ce que** l'émetteur et le récepteur se trouvent à des positions sensiblement centrales entre les côtés gauche et droit le long de la largeur du panneau de commande et du châssis.

10. Equipement audio/vidéo pour véhicule selon la revendication 10, **caractérisé en ce que** l'émetteur et le récepteur se trouvent respectivement aux mêmes angles inférieurs du panneau de commande et de la face avant du châssis.
